# FASCICULE DE BREVET EUROPEEN

(11) **EP 0 461 698 B1**
(45) Date de publication et mention de la délivrance du brevet: **29.11.1995**
(21) Numéro de dépôt: 91201339.8
(22) Date de dépôt: 03.06.1991
(51) Int. Cl.: G01B 15/02, G21K 1/04

(54) **Installation pour l'analyse d'un matériau et l'utilisation de cette installation**
Vorrichtung zur Analyse von Werkstoffen und Verwendung dieser Vorrichtung
Apparatus for analysis of a material and use of that apparatus

(30) Priorité: 13.06.1990 BE 9000599
(43) Date de publication de la demande: 18.12.1991
(73) Titulaire: SOLVAY (Société Anonyme), B-1050 Bruxelles (BE)
(72) Inventeur: Roquigny, Roger, B-1300 Wavre (BE); Nenin, Victor, B-1310 Hulpe (BE)
(74) Mandataire: Anthoine, Paul

(56) Documents cités:
- DD-A- 226 954
- DE-A- 2 004 050
- DE-A- 3 235 513
- DE-A- 3 522 779
- US-A- 4 692 935

## Description

L'invention concerne une installation pour l'analyse d'un matériau au moyen d'une méthode non destructive utilisant les propriétés des rayonnements électromagnétiques.

Les méthodes d'analyse non destructive des matériaux, utilisant des rayonnements électromagnétiques, notamment des rayons X ou gamma, impliquent la mise en oeuvre de mesures de sécurité destinées à éviter une irradiation accidentelle des utilisateurs.

Dans le document DE-A-3522779 (Twin City International, Inc.), on décrit un appareil pour l'analyse d'un matériau par la méthode de la fluorescence X. Cet appareil comprend un support pour le matériau à analyser, une source de rayons X disposée au-dessus du support et un détecteur du rayonnement fluorescent émis par le matériau irradié par la source de rayons X. Il comprend en outre un écran escamotable, destiné à être interposé entre la source de rayons X et le support du matériau, pour interrompre l'irradiation du matériau et du support; pendant l'analyse, l'écran est escamoté pour permettre l'irradiation du matériau. Cet appareil connu nécessite d'être manoeuvré avec prudence, par un personnel averti, conscient du risque encouru en cas de manipulation du matériau sur le support sans que l'écran ait été placé en regard de la source de rayons X. Il peut être la cause d'irradiations accidentelles, dans le cas où, par oubli ou négligence, on omet de manoeuvrer l'écran avant de manipuler un matériau sur le support. Un certain remède à cette situation est montré dans le document US-A-4 692 935, en fournissant une installation pour l'analyse d'une tôle d'acier. Un chemin de roulement en dehors de l'enceinte de l'installation connue constitue le support de la tôle à analyser.

L'invention remédie à cet inconvénient des appareils connus décrit ci-dessus, en fournissant une installation pour l'analyse des matériaux au moyen d'une méthode par rayonnement électromagnétique, dont l'exploitation est aisée et qui supprime le risque d'irradiation accidentelle de l'utilisateur.

L'invention concerne dès lors une installation pour l'analyse d'un matériau, comprenant un support du matériau, une sonde de mesure comprenant une source d'un rayonnement électromagnétique, un écran disposé en regard de la source, l'écran étant escamotable, et un dispositif pour déplacer le support et/ou la source entre une position de chargement permettant la pose du matériau sur le support ou l'enlèvement du matériau du support et une position de mesure pour laquelle le matériau est en regard de la source; selon l'invention, la source et le support servant à porter le matériau sont disposés à l'intérieur d'une enceinte comprenant un couvercle escamotable et l'écran est disposé entre la source et le couvercle.

Dans l'installation selon l'invention, la sonde de mesure a pour fonction de mesurer une grandeur caractéristique du matériau soumis à un rayonnement électromagnétique. A cet effet, elle comprend une source de rayonnement électromagnétique et un analyseur. La source de rayonnement électromagnétique peut être par exemple une source de rayons X ou de rayons gamma. L'analyseur peut par exemple comprendre un dispositif d'analyse spectroscopique par fluorescence X ou gamma ou un dispositif d'analyse basé sur la diffraction des rayons X.

L'écran a pour fonction de constituer un obstacle à la propagation du rayonnement électromagnétique provenant de la source, lorsqu'il est disposé en regard de celle-ci. Le matériau de l'écran dépend dès lors de l'énergie du rayonnement électromagnétique émis par la source. Dans le cas d'une source à rayons X ou gamma, on peut utiliser un écran en acier. L'écran est escamotable, ce qui signifie qu'il peut être écarté de la source de manière à ne plus faire obstacle à la propagation du rayonnement électromagnétique. L'escamotage de l'écran peut par exemple consister en un déplacement latéral ou un basculement de l'écran.

L'écart entre le support et la source est ajustable entre une position de chargement et une position de mesure. L'écart correspondant à la position de mesure est celui pour lequel un matériau à analyser, posé sur le support, est situé en regard de la source dans une position définie pour laquelle il subit une irradiation contrôlée. L'écart correspondant à la position de chargement est celui pour lequel le support est suffisamment écarté de la source pour permettre la mise en place de l'écran en face de la source et soustraire le matériau présent sur le support, à l'action du rayonnement électromagnétique. L'ajustage de l'écart entre le support et l'écran est obtenu par déplacement de la source ou du support.

Selon l'invention, la source et le support sont disposés dans une enceinte munie d'un couvercle escamotable. L'enceinte et le couvercle sont en un matériau capable de faire obstacle à une propagation du rayonnement électromagnétique de la source. Ce matériau peut être le même que celui de l'écran. Le couvercle est escamotable, ce qui signifie qu'il peut être suffisamment écarté pour ne plus faire obstacle à une propagation du rayonnement électromagnétique généré par la source. L'escamotage du couvercle peut consister en un déplacement latéral ou un basculement du couvercle. Par ailleurs, selon l'invention l'écran est disposé entre la source et le couvercle. Du fait de cette particularité de l'installation selon l'invention, l'écran ou le couvercle peuvent constituer séparément des obstacles à une propagation du rayonnement électromagnétique de la source en dehors de l'enceinte.

Dans l'installation selon l'invention, l'écran et le couvercle peuvent être verticaux, oblique ou horizontaux. On préfère, selon une forme de réalisation particulière de l'invention, avoir la source disposée sous l'écran et le couvercle disposé au-dessus de l'écran. Dans cette forme de réalisation de l'installation selon l'invention, l'écran et le couvercle sont horizontaux et leur escamotage se fait de préférence par coulissement horizontal. Le support peut par exemple comprendre des appuis disposés au voisinage de la source et déplaçables verticalement.

Dans une forme de réalisation avantageuse de l'installation selon l'invention, les manoeuvres respectives de l'écran et du couvercle entre leur position en regard de la source et leur position escamotée sont interdépendantes, de manière à avoir en permanence un obstacle entre la source de rayonnement électromagnétique et l'utilisateur de l'installation. A cet effet, l'installation comprend un organe de manoeuvre de l'écran et un organe de manoeuvre du couvercle, qui sont couplés à un organe d'asservissement qui est conçu pour que le couvercle soit fermé lorsque l'écran est escamoté et pour que l'écran soit en regard de la source lorsque le couvercle est escamoté. Dans une variante de cette forme de réalisation de l'installation, le dispositif pour déplacer le support et/ou la source entre les positions de chargement et de mesure est couplé à un asservisseur qui est conçu pour opérer ce déplacement lorsque le couvercle est fermé et l'écran escamoté, et pour empêcher ledit déplacement lorsque l'écran est en regard de la source, le couvercle étant escamoté.

L'installation peut indifféremment comprendre une ou plusieurs sondes de mesure, comprenant une ou plusieurs sources de rayonnement électromagnétique. Dans le cas de plusieurs sources de rayonnement électromagnétique, l'écran et le couvercle doivent être conçus pour faire obstacle à la propagation du rayonnement électromagnétique, lorsqu'ils sont placés en regard des sources. En variante, l'installation peut comprendre un écran individuel et un couvercle individuel pour chaque source.

L'installation selon l'invention est spécialement adaptée à l'analyse des matériaux par la méthode de la fluorescence X. Elle trouve notamment une application à la mesure ou au contrôle de l'épaisseur du revêtement métallique actif des électrodes utilisées dans les procédés d'électrolyse des solutions aqueuses de chlorure de métal alcalin visant à la production de chlore, de solutions aqueuses d'hydroxyde de métal alcalin et de solutions aqueuses de chlorate de métal alcalin. Elle présente l'avantage d'éviter tout risque d'irradiation accidentelle et peut dès lors être utilisée par des opérateurs non professionnellement exposés.

Des particularités et détails de l'installation selon l'invention vont ressortir de la description suivante des dessins annexés.
La figure 1 montre en plan, avec arrachement partiel, une forme de réalisation particulière de l'installation selon l'invention, dans laquelle le support occupe la position de chargement;
La figure 2 est une coupe selon le plan II-II de la figure 1;
La figure 3 est une vue analogue à la figure 2, de l'installation des figures 1 et 2, dans laquelle le support occupe la position de mesure;
La figure 4 est une vue analogue à celle de la figure 3, dans laquelle le support porte un matériau soumis à l'analyse.

Dans ces figures, de mêmes notations de référence désignent des éléments identiques.

L'installation représentée aux figures comprend un bâti métallique 1 entouré d'une enceinte 2, ouverte à sa partie supérieure.

A l'intérieur de l'enceinte 2, le bâti 1 supporte quatre sondes de mesure 3 comprenant chacune une source de rayonnement électromagnétique. Celle-ci peut par exemple être constituée de cadmium 109.

Trois appuis 4, supportés par des poutrelles 5 du bâti 1, sont disposés autour des sondes 3 et servent à supporter les matériaux à analyser. Les appuis 4 sont déplaçables verticalement au moyen de vérins 14.

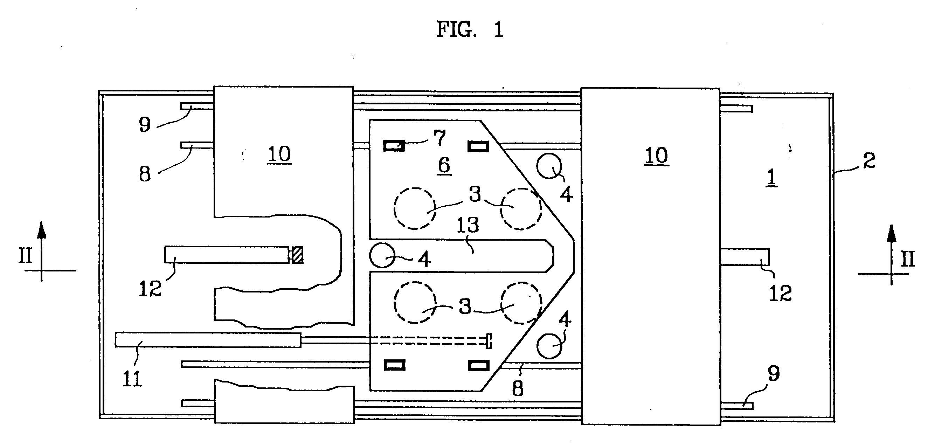

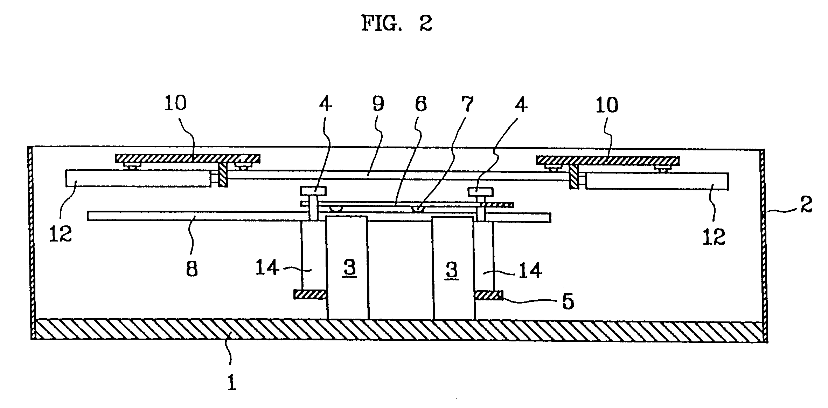

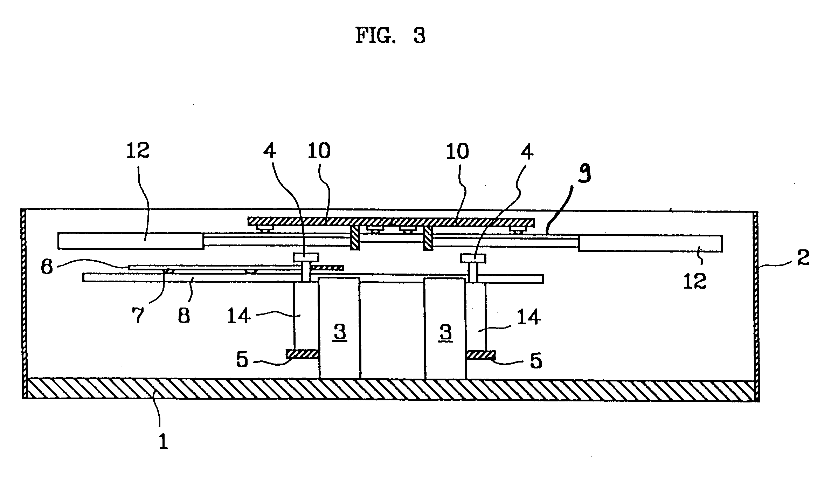

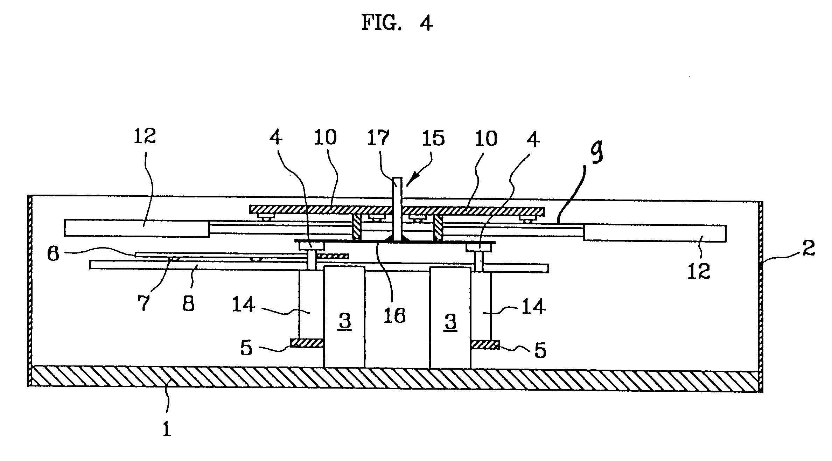

Un écran horizontal 6 est mobile entre une position pour laquelle il est situé au-dessus des sondes 3 (figures 1 et 2) et une position escamotée, pour laquelle il se trouve écarté des sondes 3 (figures 3 et 4). A cet effet, l'écran 6 est équipé de galets 7 circulant sur un chemin de roulement 8 posé sur des traverses (non représentées) du bâti 1. L'écran 6 présente une échancrure médiane 13 pour permettre son déplacement sur le chemin de roulement 8 et le passage d'un des appuis 4.

Un second chemin de roulement horizontal 9, posé sur des traverses (non représentées) du bâti 1, porte un couvercle constitué d'une paire de panneaux 10. Ceux-ci sont déplaçables en sens opposés sur le chemin de roulement 9, au-dessus de l'écran 6, entre une position pour laquelle ils sont écartés l'un de l'autre (figures 1 et 2) et une position pour laquelle ils sont jointifs (figures 3 et 4).

Le déplacement de l'écran 6 sur son chemin de roulement 8 est assuré au moyen d'un vérin 11 solidarisé au bâti 1. Le déplacement des panneaux 10 sur leur chemin de roulement 9 est assuré par l'intermédiaire d'une paire de vérins 12 solidaires du bâti 1.

Le vérin 11, les vérins 12 et les vérins 14 peuvent être par exemple des vérins à fonctionnement hydraulique ou pneumatique. Ces vérins sont reliés à un dispositif de régulation (non représenté) qui assure le fonctionnement automatique de l'installation. Ce dispositif de régulation comprend un organe d'asservissement qui régule l'actionnement des vérins 11 et 12 et un asservisseur qui régule l'actionnement des vérins 14 en fonction de l'actionnement des vérins 11 et 12.

Pour analyser un matériau, on opère en plusieurs étapes.

Dans une première étape, on manoeuvre le dispositif de régulation pour amener les appuis 4 dans la position de chargement. Le dispositif de régulation réagit dès lors automatiquement en exécutant les fonctions successives suivantes : la montée des appuis 4; le déplacement de l'écran 6 pour amener celui-ci au-dessus des sondes 3; le déplacement des panneaux 10 pour les écarter l'un de l'autre.

Dans une seconde étape, on dépose le matériau à analyser sur les appuis 4.

Dans une troisième étape, on actionne le dispositif de régulation pour amener les appuis 4 dans la position de mesure. Le dispositif de régulation réagit alors automatiquement en exécutant les fonctions successives suivantes : le déplacement des panneaux 10 vers la position de fermeture pour laquelle ils sont jointifs; l'escamotage de l'écran 6; la descente des appuis 4, ce qui a pour résultat de mettre le matériau en position d'analyse en regard des sondes 3. A l'issue de cette troisième étape le matériau est soumis à l'action du rayonnement électromagnétique et les résultats de l'analyse sont transférés automatiquement vers un tableau d'affichage, une imprimante ou un ordinateur pour y être traités.

Dans une quatrième étape, qui fait suite à l'analyse du matériau, on actionne le dispositif de régulation pour permettre la récupération du matériau. Le dispositif de régulation réagit alors en exécutant automatiquement la séquence des fonctions suivantes : actionnement des vérins 14 pour obtenir la montée des appuis 4; actionnement du vérin 11 pour obtenir le déplacement de l'écran 6 au-dessus des sondes 3; actionnement des vérins 12 pour obtenir l'écartement des panneaux 10.

Dans une forme de réalisation modifiée de l'installation qui vient d'être décrite, les appuis 4 sont fixes et ce sont les sondes 3 qui sont déplaçables verticalement.

L'installation selon l'invention trouve une application intéressante dans la mesure de l'épaisseur du revêtement métallique actif des anodes des cellules d'électrolyse utilisées pour la production de chlore. Ces anodes comprennent en effet généralement un substrat en métal filmogène (titane, tantale, niobium, tungstène et alliage de ces métaux), portant un revêtement électroconducteur. Pendant l'exploitation de ces anodes dans une cellule d'électrolyse, le revêtement s'use progressivement et il est dès lors intéressant de pouvoir contrôler périodiquement l'épaisseur du revêtement résiduel, afin d'assurer un fonctionnement optimum de la cellule d'électrolyse. La figure 4 montre une telle anode 15 en position d'analyse sur les appuis 4 de l'installation selon l'invention. L'anode 15 est posée sur les appuis 4 de manière que le revêtement 16 dont on désire connaître l'épaisseur soit orienté vers les sondes 3. Une tige cylindrique 17 de l'anode traverse un orifice correspondant du couvercle, formé de deux découpes semi-cylindriques pratiquées dans les bords jointifs des panneaux 10. Dans cette application de l'invention, le revêtement 16 de l'anode 15 est irradié par le rayonnement X émis par les sondes 3 et celles-ci mesurent l'intensité du rayonnement fluorescent produit par le revêtement. L'intensité du rayonnement fluorescent étant proportionnelle à la quantité de revêtement irradié, elle permet de déterminer l'épaisseur de celui-ci.

Dans une variante de réalisation avantageuse, l'installation qui vient d'être décrite comprend un dispositif de centrage du matériau à analyser sur les appuis. Dans le cas d'une installation destinée à l'analyse de matériaux de format défini (par exemple des électrodes de section transversale carrée ou rectangulaire), le dispositif de centrage peut comprendre des vérins destinés à repousser le matériau contre des butées fixes.

## Revendications

1. Installation pour l'analyse d'un matériau, comprenant un support (4) du matériau, une sonde de mesure (3) comprenant une source d'un rayonnement électromagnétique, un écran (6) disposé en regard de la source, l'écran étant escamotable, et un dispositif (14) pour déplacer le support et/ou la source entre une position de chargement permettant la pose du matériau sur le support ou l'enlèvement du matériau du support et une position de mesure pour laquelle le matériau est en regard de la source, caractérisée en ce que la source (3) et le support (4) servant à porter le matériau sont disposés à l'intérieur d'une enceinte (2) comprenant un couvercle escamotable (10) et en ce que l'écran (6) est disposé entre la source (3) et le couvercle (10).

2. Installation selon la revendication 1, caractérisée en ce que la source (3) est disposée sous l'écran (6) et le couvercle (10) est disposé au-dessus de l'écran (6).

3. Installation selon la revendication 1 ou 2, caractérisée en ce qu'un organe de manoeuvre (11) de l'écran (6) et un organe de manoeuvre (12) du couvercle (10) sont couplés à un organe d'asservissement conçu pour que le couvercle (10) soit fermé lorsque l'écran (6) est escamoté et pour que l'écran (6) soit en regard de la source (3) lorsque le couvercle (10) est escamoté.

4. Installation selon l'une quelconque des revendications 1 à 3, caractérisée en ce que le dispositif (14) pour déplacer le support (4) et/ou la source est couplé à un asservisseur conçu pour manoeuvrer le dispositif (14) lorsque le couvercle (10) est fermé et l'écran (6) escamoté.

5. Installation selon la revendication 4, caractérisée en ce que le dispositif d'asservissement et l'asservisseur sont couplés à un organe d'actionnement unique qui a pour fonction, d'une part, lorsque le support (4) occupe sa position de chargement, d'actionner sucessivement l'organe de manoeuvre (12) du couvercle (10) pour fermer celui-ci, l'organe de manoeuvre (11) de l'écran (6) pour escamoter celui-ci et le dispositif (14) pour amener le support (4) dans sa position de mesure et, d'autre part, lorsque le support (4) occupe sa position de mesure, d'actionner successivement le dispositif (14) pour amener le support (4) dans la position de chargement, l'organe de manoeuvre (11) de l'écran (6) pour placer celui-ci en regard de la source (3) et l'organe de manoeuvre (12) du couvercle (10) pour escamoter celui-ci.

6. Installation selon l'une quelconque des revendications 2 à 5, caractérisée en ce que le support comprend trois appuis (4) déplaçables verticalement.

7. Installation selon l'une quelconque des revendications 1 à 6, caractérisée en ce que l'écran (6) et le couvercle (10) sont montés sur des chemins de roulement (8, 9) et les organes de manoeuvre (11, 12) de l'écran (6) et du couvercle (10) comprennent un couple de vérins.

8. Installation selon l'une quelconque des revendications 1 à 7, caractérisée en ce que la source de rayonnement électromagnétique est une source de rayons X.

9. Utilisation de l'installation selon la revendication 8, pour la mesure de l'épaisseur d'un revêtement métallique sur un substrat, par la méthode de la fluorescence X.

10. Utilisation selon la revendication 9, caractérisée en ce que le support (4) est conçu pour l'analyse d'un matériau consistant en une électrode pour cellule d'électrolyse, ladite électrode comprenant un substrat en titane, en tantale, en nobium, en tungstène ou en alliage de ces métaux et un revêtement électroconducteur.

## Claims

1. Apparatus for the analysis or a material, comprising a support (4) for the material, a measurement probe (3) comprising a source of electromagnetic radiation, a screen (6) arranged opposite the source, the screen being retractable, and a device (14) for moving the support and/or source between a loading position allowing the material to be placed on the support or the material to he removed from the support and a measurement position for which the material is opposite the source, characterized in that the source (3) and the support (4) serving to carry the material are arranged inside a chamber (2) comprising a retractable cover (10) and in that the screen (6) is arranged between the source (3) and the cover (10).

2. Apparatus according to Claim 1, characterized in that the source (3) is arranged beneath the screen (6) and the cover (10) is arranged above the screen (6).

3. Apparatus according to claim 1 or 2, characterized in that a member (11) for operating the screen (6) and a member (12) for operating the cover (10) are coupled to a servocontrol member designed so that the cover (10) is closed when the screen (6) is retracted and so that the screen (6) is opposite the source (3) when the cover (10) is retracted.

4. Apparatus according to any one of Claims 1 to 3, characterized in that the device (14) for moving the support (4) and/or the source is coupled to a servocontroller designed for operating the device (14) when the cover (10) is closed and the screen (6) retracted.

5. Apparatus according to Claim 4, characterized in that the servocontrol device and the servocontroller are coupled to a single-action member whose function, on the one hand, when the support (4) occupies its loading position, is to actuate in succession the member (12) for operating the cover (10) in order to close the latter, the member (11) for operating the screen (6) in order to retract the latter and the device (14) for bringing the support (4) into its measurement position, and, on the other hand, when the support (4) occupies its measurement position, is to actuate in succession the device (14) for bringing the support (4) into the loading position, the member (11) for operating the screen (6) in order to position the latter opposite the source (3) and the member (12) for operating the cover (10) in order to retract the latter.

6. Apparatus according to any one of Claims 2 to 5, characterized in that the support comprises three bearing points (4) which can move vertically.

7. Apparatus according to any one of Claims 1 to 6, characterized in that the screen (6) and the cover (10) are mounted on running tracks (8, 9) and the members (11, 12) for operating the screen (6) and the cover (10) comprise a pair of cylinders.

8. Apparatus according to any one of Claims 1 to 7, characterized in that the source of electromagnetic radiation is an X-ray source.

9. Use of the apparatus according to Claim 8, for measuring the thickness of a metal coating on a substrate, using the X-ray fluorescence method.

10. Use according to Claim 9, characterized in that the support (4) is designed for the analysis of a material consisting of an electrode for an electrolysis cell, the said electrode comprising a substrate made of titanium, of tantalum, of niobium, of tungsten or of an alloy of these metals and an electrically conductive coating.

## Patentansprüche

1. Einrichtung für die Analyse eines Materials, umfassend eine Auflage (4) für das Material, eine Meßsonde (3), die eine Quelle elektromagnetischer Strahlung umfaßt, eine der Quelle gegenüberliegende Abschirmung (6), wobei die Abschirmung einziehbar ist, sowie eine Vorrichtung (14) zum Verfahren der Auflage und/oder der Quelle zwischen einer das Absetzen des Materials auf der Auflage oder das Anheben des Materials von der Auflage zulassenden Bestückungsposition und einer Meßposition, für die das Material der Quelle gegenüberliegt, dadurch gekennzeichnet, daß die Quelle (3) und die zum Tragen des Materials dienende Auflage (4) im Inneren einer Einfassung (2) angeordnet sind, die eine einziehbare Abdeckung (10) umfaßt, und daß die Abschirmung (6) zwischen der Quelle (3) und der Abdeckung (10) angeordnet ist.

2. Einrichtung nach Anspruch 1, dadurch gekennzeichnet, daß die Quelle (3) unter der Abschirmung (6) angeordnet ist, und die Abdeckung (10) über der Abschirmung (6) angeordnet ist.

3. Einrichtung nach Anspruch 1 oder 2, dadurch gekennzeichnet, daß ein Betätigungsorgan (11) für die Abschirmung (6) und ein Betätigungsorgan (12) für die Abdeckung (10) mit einem Regelorgan gekoppelt sind, das so konzipiert ist, daß die Abdeckung (10) geschlossen ist, wenn die Abschirmung (6) eingezogen wird, und daß die Abschirmung (6) der Quelle (3) gegenüberliegt, wenn die Abdeckung (10) eingezogen wird.

4. Einrichtung nach einem beliebigen der Ansprüche 1 bis 3, dadurch gekennzeichnet, daß die Vorrichtung (14) zum Verfahren der Auflage (4) und/oder der Quelle mit einer Regeleinrichtung gekoppelt ist, die konzipiert ist, um die Vorrichtung (14) zu betätigen, wenn die Abdeckung (10) geschlossen und die Abschirmung (6) eingezogen ist.

5. Einrichtung nach Anspruch 4, dadurch gekennzeichnet, daß das Regelorgan und die Regeleinrichtung mit einem einzigen Aktivierungsorgan gekoppelt sind, welches zur Aufgabe hat, einerseits, wenn die Auflage (4) ihre Bestückungsposition einnimmt, nacheinander zu aktivieren: das Betätigungsorgan (12) für die Abdeckung (10), um diese zu schließen, das Betätigungsorgan (11) für die Abschirmung (6), um diese einzuziehen, sowie die Vorrichtung (14), um die Auflage (4) in deren Meßposition zu bringen, und andererseits, wenn die Auflage (4) ihre Meßposition einnimmt, nacheinander zu aktivieren: die Vorrichtung (14), um die Auflage (4) in die Bestückungsposition zu bringen, das Betätigungsorgan (11) für die Abschirmung (6), um diese der Quelle (3) gegenüber zu plazieren, sowie das Betätigungsorgan (12) für die Abdeckung (10), um diese einzuziehen.

6. Einrichtung nach einem beliebigen der Ansprüche 2 bis 5, dadurch gekennzeichnet, daß die Auflage drei vertikal verfahrbare Stützen (4) umfaßt.

7. Einrichtung nach einem beliebigen der Ansprüche 1 bis 6, dadurch gekennzeichnet, daß die Abschirmung (6) und die Abdeckung (10) auf Rollenbahnen (8, 9) montiert sind, und die Betätigungsorgane (11, 12) für die Abschirmung (6) und die Abdeckung (10) ein Paar Zylinder umfassen.

8. Einrichtung nach einem beliebigen der Ansprüche 1 bis 7, dadurch gekennzeichnet, daß die Quelle elektromagnetischer Strahlung eine Röntgenstrahlenquelle ist.

9. Verwendung der Einrichtung nach Anspruch 8 zur Messung der Dicke eines metallischen Überzugs auf einem Substrat mittels Röntgenfluoreszenzverfahren.

10. Verwendung nach Anspruch 9, dadurch gekennzeichnet, daß die Auflage (4) für die Analyse eines aus einer Elektrode für eine Elektrolysezelle bestehenden Materials konzipiert ist, wobei die besagte Elektrode ein Substrat aus Titan, aus Tantal, aus Niob, aus Wolfram oder aus einer Legierung dieser Metalle und einen elektrisch leitenden Überzug umfaßt.
